# EUROPÄISCHE PATENTANMELDUNG

(11) **EP 0 872 723 A2**
(43) Veröffentlichungstag der Anmeldung: **21.10.1998**
(21) Anmeldenummer: 98107142.6
(22) Anmeldetag: 20.04.1998
(51) Int. Cl.: G01N 21/01

(54) **Optischer Sensor**

(30) Priorität: 18.04.1997 DE 19716252
(71) Anmelder: ENDRESS + HAUSER CONDUCTA GESELLSCHAFT FÜR MESS UND REGELTECHNIK mbH & Co., 70839 Gerlingen (DE)
(72) Erfinder: Schrettenbrunner,M.B.,Dr., 72070 Tübingen (DE)
(74) Vertreter: Friz, Oliver

(57) **Zusammenfassung**

Die Erfindung betrifft einen optischen Sensor mit einem ein optisches Signal erzeugenden und emittierenden Sender und mit einem dem Sender zugeordneten Empfänger für das durch Wechselwirkung mit dem zu messenden Medium veränderte optische Signal, wobei der Sender bzw. der Empfänger auf einer Gehäuseseite (14) angeordnet und durch eine in einer Gehäusewand (2) vorgesehene optische Durchführung (10) für das optische Signal dichtend von der Medienseite (12) abgetrennt ist; die optische Durchführung wird bei diesem Sensor dadurch verbessert, dass sie einen für das optische Signal transparenten Körper umfasst, der mittels eines glashaltigen oder gläsernen Materials (8) mit einem gegenüber dem Schmelzpunkt des transparenten Körpers (6) niedrigeren Schmelzpunkt in eine Durchgangsöffnung (4) in der Gehäusewand eingeschmolzen ist.

## Beschreibung

Die Erfindung betrifft einen optischen Sensor mit einem ein optisches Signal erzeugenden und emittierenden Sender und mit einem dem Sender zugeordneten Empfänger für das durch Wechselwirkung mit dem zu messenden Medium veränderte optische Signal, wobei der Sensor bzw. Empfänger auf einer Gehäuseseite angeordnet und durch eine in eine Gehäusewand vorgesehene optische Durchführung für das optische Signal dichtend von der Medienseite abgetrennt ist.

Ein derartiger optischer Sensor ist aus der EP 0 590 487 A1 bekannt. Sensoren der genannten Art werden zum Messen der Trübung oder der Farbe von Flüssigkeiten benutzt; die Erfindung ist jedoch nicht auf diese Anwendungen beschränkt. Desweiteren wird darauf hingewiesen, dass Sender und Empfänger nicht notwendigerweise in demselben Sensorgehäuse untergebracht sein müssen, sondern dass sie auch in getrennten, inbesondere einander gegenüberliegenden Gehäuseteilen angeordnet sein können. In jedem Fall wird von dem Sender ein optisches Signal erzeugt, das durch die abgedichtete optische Durchführung hindurch auf die Medienseite geleitet wird. Ein Teil des Signals wird dann nach einer Wechselwirkung (Reflexion, Streuung, Filterung, Polarisation) mit dem zu untersuchenden Medium in veränderter, insbesondere intensitätsreduzierter Form, durch eine weitere oder dieselbe optische Durchführung hindurch von der Medienseite zu dem Empfänger geleitet.

Zur Ausbildung der optischen Durchführung werden bei bekannten Sensoren transparente Fensterkörper in eine Durchgangsöffnung in der Gehäusewand eingepresst und/oder eingeklebt. Eine derartige Fügung ist jedoch nur bei verhältnismäßig niederen Drucken und Temperaturen einsetzbar. Bei höheren Drucken bzw. Temperaturen müssen transparente Fensterkörper mit konventioneller Technologie, z.B. unter Verwendung eines O-Rings, gegenüber dem Sensorgehäuse festgelegt und abgedichtet werden. Die Verwendung eines O-Rings bringt jedoch zusätzliche Probleme mit sich, da bei Verwendung von O-Ringen stets Beständigkeitsprobleme auftreten können, so dass grundsätzlich die Inprozess-Messung bzw -Überwachung der Dichtstelle erforderlich ist, was aufwendig und bei der Herstellung und beim Gebrauch des Sensors kostenintensiv ist. Zudem ist der Einsatz von O-Ringen im Hinblick auf die hygienischen Erfordernisse problematisch, da sich eine fugen- und spaltenfreie Dichtstelle kaum oder nur schwer erreichen lässt. Die Verwendung der vorstehend beschriebenen Dichtungsmaterialien (O-Ring bzw. Klebstoff) erweist sich insbesondere in der Lebensmittelindustrie und pharmazeutischen Industrie ebenfalls als problematisch, da sie nur aus speziell zugelassenen Materialien bestehen dürfen, die zumeist nicht über den gesamten Anwendungsbereich im Hinblick auf Druck, Temperatur sowie die Art der Medien, mit denen der Sensor bestimmungsgemäß in unmittelbaren Kontakt tritt, geeignet sind.

Der vorliegenden Erfindung liegt daher die Aufgabe zugrunde, einen optischen Sensor der eingangs beschriebenen Art so weiterzubilden, dass die optische Durchführung hygienischen Anforderungen entsprechend spalten- und fugenfrei ist und über den gesamten ansich denkbaren Druck- und Temperaturbereich einsetzbar ist. Der Sensor soll herstellungstechnisch dennoch auf sehr einfache und kostengünstige Art und Weise herstellbar sein.

Diese Aufgabe wird durch einen Sensor der genannten Art erfindungsgemäß dadurch gelöst, dass die optische Durchführung einen für das optische Signal transparenten Körper umfasst, der mittels eines glashaltigen oder gläsernen Materials mit einem gegenüber dem Schmelzpunkt des transparenten Körpers niedrigeren Schmelzpunkt in eine Durchgangsöffnung in der Gehäusewand eingeschmolzen ist.

Es wird also mit der Erfindung vorgeschlagen, anstelle eines Dichtmaterials in Form eines O-Rings oder eines Klebstoffs den transparenten Körper mittels eines niedrigschmelzenden chemisch hochresistenten Mediums in die Durchgangsöffnung einzuschmelzen. Es hat sich überraschenderweise herausgestellt, dass eine derartige Verbindung dicht ist und nicht zur Ausbildung von Mikro-Rissen neigt. Durch das Einschmelzen des transparenten Körpers werden dessen relevanten optischen Eigenschaften nicht verändert. Mit dieser Technologie kann auch das Auftreten hygienisch bedenklicher schmutzaufnehmender Fugen bzw. Spalten vermieden werden, indem die Stirnseite des transparenten Körpers vorzugsweise flächenbündig mit der die Durchgangsöffnung umgebenden Seite der Gehäusewand verläuft.

Die Standzeit sowie die Prozesssicherheit beim Einsatz des Sensors in aggressiven Medien wird erhöht. Die Zahl der Einsatzbereiche, z.B. in chemischen Prozessen, wird erhöht, da höhere Drücke und Temperaturen kein Problem mehr darstellen und das gläserne oder glashaltige Material chemisch inert ist.

Um den transparenten Körper, ohne seine optischen Eigenschaften zu verändern, in der Durchgangsöffnung dauerhaft anordnen zu können, ist es wesentlich, dass beim Schmelzen des glashaltigen oder gläsernen Materials der transparente Körper selbst unverändert bleibt.

Es hat sich als besonders vorteilhaft erwiesen, wenn das glashaltige oder gläserne Material ein niedrig schmelzendes Glas, insbesondere ein Borsilikat-Glas, ist. Ein besonders geeignetes Borsilikat-Glas wird von der Firma Schott, Geräte GmbH, Hofheim, Deutschland unter dem Handelsnamen Duran-Glas angeboten. Duran-Glas schmilzt bei einer Temperatur von etwa 1100 °C.

Es hat sich desweiteren als vorteilhaft erwiesen, wenn der für das optische Signal transparente Körper von einem Saphir gebildet ist, der als äußerst medienbeständig und im Hinblick auf seine optischen Eigenschaften sehr geeignet anzusehen ist und erst bei wesentlich höheren Temperaturen als Duran-Glas schmilzt.

Wenn die die Durchgangsöffnung begrenzende Gehäusewand aus einem metallischen Material, insbesondere aus Edelstahl, besteht, erweist sich dies im Hinblick auf hygienische Erfordernisse als besonders vorteilhaft. Durch Beschichten einer metallischen Gehäusewand kann die chemische Resistenz in fast unbegrenzter Weise modifiziert bzw. an die Erfordernisse angepasst werden.

Im eingeschmolzenen Zustand ist der transparente Körper von dem glashaltigen oder gläsernen Material vorzugsweise zylinder- oder hülsenförmig umgeben, was bedeutet, dass der transparente Körper in Umfangsrichtung der Durchgangsöffnung über wenigstens eine durchgehend geschlossene Linie von dem glashaltigen oder gläsernen Material umgeben ist. Der transparente Körper ist an seinen Stirnseiten jedoch vorzugsweise nicht von dem glashaltigen oder gläsernen Material bedeckt, um den Ein- und Austritt des optischen Signals nicht in nachteiliger Weise zu beeinflussen. Es wird darauf hingewiesen, dass die Querschnittsform des transparenten Körpers bzw. des gläsernen Materials ansich beliebig ist und insbesondere eine zylinderförmige, prismatische oder polygone Form aufweisen kann.

Das glashaltige oder gläserne Material könnte in ansich beliebiger Form in einen Zwischenraum zwischen den transparenten Körper und die Begrenzung der Durchgangsöffnung eingefüllt und auf die Schmelztemperatur erhitzt werden. Es könnte auch in flüssigem Zustand eingegossen werden. In bevorzugter Weiterbildung des Erfindungsgedankens ist das glashaltige oder gläserne Material vor dem Erschmelzen als zylinder- oder hülsenförmiger Formkörper in die Durchgangsöffnung besonders einfach eingesetzt und umgibt den transparenten Körper bzw. nimmt diesen auf. Beim Erschmelzen des glashaltigen oder gläsernen Materials wird dann der Zwischenraum zwischen dem transparenten Körper und der Wandung der Durchgangsöffnung in Umfangsrichtung um den transparenten Körper herum dichtend ausgefüllt.

Hierbei erweist es sich als vorteilhaft, wenn das glashaltige oder gläserne Material im verflüssigten Zustand in einen insbesondere kapillaren Spalt zwischen dem transparenten Körper und der Wandung der Durchgangsöffnung gezogen und sodann erstarrt ist.

In Weiterbildung der Erfindung könnte die Durchgangsöffnung zur Medienseite hin verjüngt ausgebildet sein. Dies hätte den Vorteil, dass ein sich zur Medienseite hin verjüngender Spaltraum zwischen dem transparenten Körper und der die Durchgangsöffnung begrenzenden Wandung geschaffen wäre, in welchen das erschmolzene gläserne oder glashaltige Material beim Einschmelzen des transparenten Körpers nach unten hineinfließen kann.

Nach einer weiteren Erfindungsvariante sind in der Durchgangsöffnung in radialer Richtung erstreckte Auflager für den noch nicht erschmolzenen zylinder- oder hülsenförmigen Formkörper ausgebildet. Der Formkörper kann dann mit einer Stirnseite auf diesen Auflagern ruhen, bis er geschmolzen wird. Die in radialer Richtung erstreckten Auflager sind vorzugsweise dadurch gebildet, dass die Durchgangsöffnung stufenförmig abgesetzt oder in sonstiger Weise verjüngt ist, dass sie also einen durchmessergrößeren und einen durchmesserkleineren Abschnitt aufweist. Der durchmesserkleinere Abschnitt ist dabei vorzugsweise der Medienseite zugewandt und nur wenig größer ausgebildet als der Durchmesser bzw. die Abmessung des eingeschobenen transparenten Körpers, so dass zwischen dem transparenten Körper und der Wandung der Durchgangsöffnung nur ein verhältnismäßig geringer Spalt, der insbesondere oder vorzugsweise kapillare Wirkungen zeigen kann, ausgebildet ist.

Der durchmesserkleinere Abschnitt kann aber auch so bemessen sein, dass er der Abmessung des transparenten Körpers im wesentlichen genau entspricht, so dass dieser an einem der Medienseite zugewandten Abschnitt spaltfrei in die Öffnung eingesetzt ist. Die Abdichtung erfolgt solchenfalls durch das gläserne oder glashaltige Material im durchmessergrößeren Abschnitt der Durchgangsöffnung.

Die Durchgangsöffnung könnte sich aber auch zur Medienseite hin konisch verjüngen, so dass auch auf diese Weise eine fugenfreie Einfügung des transparenten Körpers erreicht werden kann.

Weitere Merkmale, Einzelheiten und Vorteile der Erfindung ergeben sich aus der zeichnerischen Darstellung und nachfolgenden Beschreibung bevorzugter Ausführungsformen der optischen Durchführung bei einem erfindungsgemäßen optischen Sensor. In der Zeichnung zeigt:
- Figur 1: eine Schnittansicht des prinzipiellen Aufbaus einer erfindungsgemäßen optischen Durchführung; und
- Figuren 2 bis 4: Schnittansichten weiterer Ausführungsformen von optischen Durchführungen nach der Erfindung.

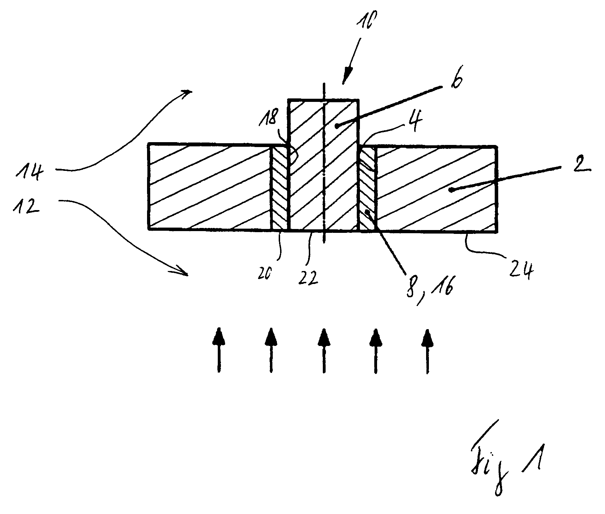

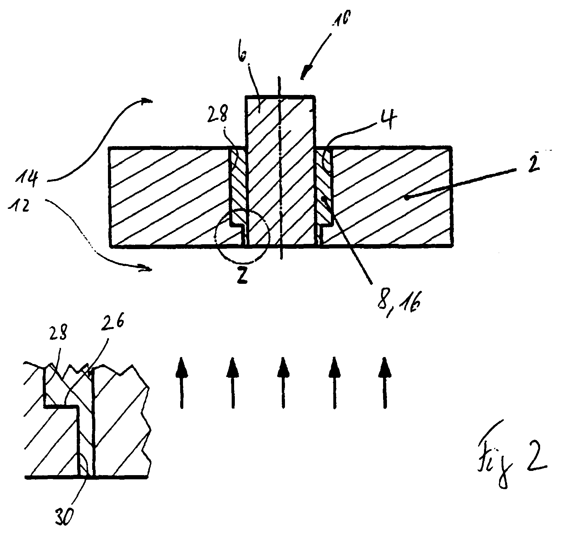

In den Figuren 1 und 2 ist eine Gehäusewandung eines optischen Sensors mit dem Bezugszeichen 2 bezeichnet. In der aus Edelstahl bestehenden Gehäusewandung 2 ist eine Durchgangsöffnung 4 vorgesehen, die zusammen mit einem für ein optisches Signal transparenten Körper 6 und einem spaltfüllenden Material 8 eine optische Durchführung 10 bildet. Die Gehäusewand 2 und die optische Durchführung 10 trennen eine Medienseite 12 des Sensors von einer inneren Elektronikseite 14, wo auch ein in der schematischen Darstellung nicht dargestellter Sender vorgesehen ist, welcher ein optisches Signal erzeugt und dieses durch die optische Durchführung 10 hindurch zur Medienseite 12 aussendet. Nach Wechselwirkung des optischen Signals mit dem zu untersuchenden Medium wird wenigstens ein Teil des optischen Signals durch die optische Durchführung 10 oder auch durch eine optische Durchführung eines anderen Gehäuseteils hindurch zu einem in den Figuren ebenfalls nicht dargestellten Empfänger geleitet, der das veränderte optische Signal aufnimmt, so dass eine Messwertverarbeitung stattfinden kann.

Die optische Durchführung nach Figur 1 wurde hergestellt, indem in die Durchgangsöffnung 4 das spaltfüllende Material 8 in Form eines zylindrischen Formkörpers 16 eingesetzt wird, dessen Außendurchmesser geringfügig geringer als der Innendurchmesser der Durchgangsöffnung 4 bemessen ist, so dass er gerade in die Durchgangsöffnung 4 einsetzbar ist. In die zylindrische Öffnung 18 des Formkörpers 16 wird sodann der aus einem Saphir bestehende transparente Körper 6 eingesetzt. Dabei ruhen die medienseitigen Stirnseiten 20, 22 des Formkörpers 16 bzw. des transparenten Körpers 6 auf einer in der Figur nicht dargestellten Unterlage und verlaufen quasi flächenbündig mit der Außenseite 24 der Gehäusewand 2. Die dargestellte Anordnung wird dann auf die Schmelztemperatur des vorzugsweise aus Borsilikat-Glas, insbesondere Duran-Glas, bestehenden Formkörpers 16 erhitzt, so dass dieser schmilzt und den Spalt zwischen dem transparenten Körper 6 und der Wandung der Durchgangsöffnung 4 vollständig und abdichtend ausfüllt. Durch das Erstarren des Glasmaterials 8 ist der transparente Körper 6 dauerhaft dichtend in der Durchgangsöffnung 4 eingeschmolzen.

Bei der Ausführungsform nach Figur 2 ist die Durchgangsöffnung 4 als abgesetzte Bohrung ausgebildet und weist demgemäß eine in radialer Richtung verlaufende Stufen- oder Auflagerfläche 26 auf, die einen durchmessergrößeren Abschnitt 28 von einem durchmesserkleineren Abschnitt 30 der Durchgangsöffnung 4 trennt.

Die optische Durchführung 10 nach Figur 2 wurde so hergestellt, dass zunächst ein zylindrischer Formkörper 16, vorzugsweise aus Borsilikat-Glas, auf die Auflagerfläche 26 aufgelegt und nach Einsetzen des transparenten Körpers 6 wie vorstehend beschrieben erschmolzen wird. Dabei fließt die Glasschmelze unterstützt durch eine vorzugsweise kapillare Wirkung des Spalts zwischen dem durchmesserkleineren Abschnitt 30 und dem transparenten Körper 6 in diesen Spalt hinein und führt beim Erstarren zu einer dauerhaften Abdichtung.

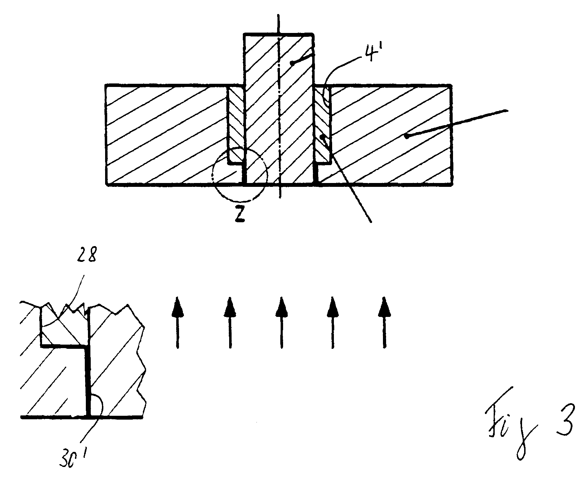

Figur 3 zeigt eine weitere Ausführungsform, bei der sich die Durchgangsöffnung 4' von der Durchgangsöffnung 4 nach Figur 2 dadurch unterscheidet, dass der durchmesserkleinere Abschnitt 30' im wesentlichen genau der Abmessung des transparenten Körpers 6 entspricht, so dass dieser im wesentlichen spaltenfrei in den durchmesserkleineren Abschnitt 30' eingepresst ist. Die gasdichte Abdichtung wird jedoch erst durch das gläserne oder glashaltige Material im durchmessergrößeren Abschnitt 28 der Durchgangsöffnung 4' erreicht.

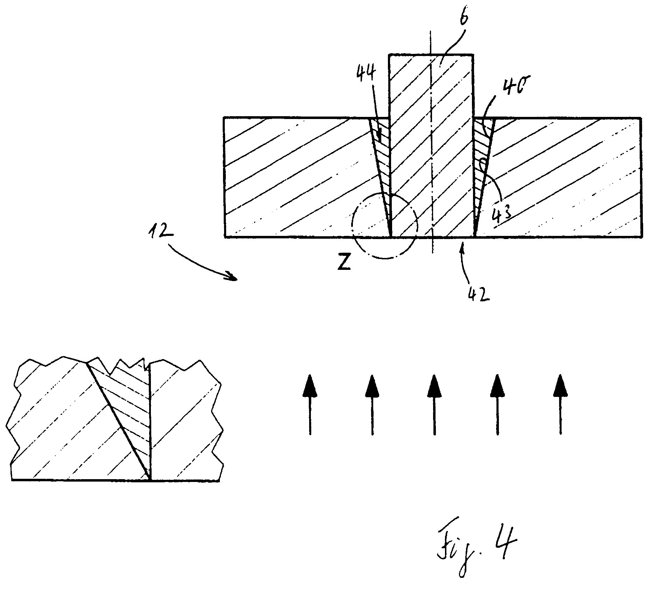

Schließlich zeigt Figur 4 noch eine weitere Ausführungsform mit einer sich zur Medienseite 12 hin verjüngenden, im Querschnitt konusförmigen Durchgangsöffnung 40. Die konusförmige Durchgangsöffnung 40 ist an ihrer medienseitigen Mündung 42 so bemessen, dass sie im wesentlichen der Abmessung des transparenten Körpers 6 entspricht oder geringfügigst geringer ist als diese, so dass der transparente Körper 6 unter Ausbildung eines Presssitzes in die Durchgangsöffnung 40 einsetzbar ist. Durch Einsetzen des transparenten Körpers 6 wird zwischen diesem und der die Durchgangsöffnung 40 bildenden Wandung 43 ein im Querschnitt keilförmiger Spaltraum 44 gebildet, der von dem erschmolzenen gläsernen oder glashaltigen Material aufgefüllt ist. Auch in diesem Fall erweist es sich als vorteilhaft, wenn das gläserne oder glashaltige Material in Form eines hülsenförmigen Formkörpers in den Spaltraum 44 eingesetzt wird, der sich mit seiner Stirnseite entlang einer kreisförmigen Linie gegen die Wandung 43 abstützt.

## Patentansprüche

1. Optischer Sensor mit einem ein optisches Signal erzeugenden und emittierenden Sender und mit einem dem Sender zugeordneten Empfänger für das durch Wechselwirkung mit dem zu messenden Medium veränderte optische Signal, wobei der Sender bzw. der Empfänger auf einer Gehäuseseite (14) angeordnet und durch eine in einer Gehäusewand (2) vorgesehene optische Durchführung (10) für das optische Signal dichtend von der Medienseite (12) abgetrennt ist, **dadurch gekennzeichnet**, dass die optische Durchführung (10) einen für das optische Signal transparenten Körper (6) umfasst, der mittels eines glashaltigen oder gläsernen Materials (8) mit einem gegenüber dem Schmelzpunkt des transparenten Körpers (6) niedrigeren Schmelzpunkt in eine Durchgangsöffnung (4) in der Gehäusewand eingeschmolzen ist.

2. Sensor nach Anspruch 1, dadurch gekennzeichnet, dass der transparente Körper (6) aus Saphir besteht.

3. Sensor nach Anspruch 1 oder 2, dadurch gekennzeichnet, dass das gläserne Material (8) Duran-Glas ist.

4. Sensor nach Anspruch 1, 2 oder 3, dadurch gekennzeichnet, dass die Gehäusewand (2) aus einem metallischen Material besteht.

5. Sensor nach Anspruch 4, dadurch gekennzeichnet, dass die Gehäusewand (2) aus Edelstahl besteht.

6. Sensor nach einem der vorstehenden Ansprüche, dadurch gekennzeichnet, dass das glashaltige oder gläserne Material (8) den transparenten Körper (6) zylinder- oder hülsenförmig umgibt.

7. Sensor nach Anspruch 6, dadurch gekennzeichnet, dass das glashaltige oder gläserne Material als zylinder- oder hülsenförmiger Formkörper (16) in die Durchgangsöffnung (4) eingesetzt ist und den transparenten Körper (6) umgibt bzw. aufnimmt.

8. Sensor nach einem der vorstehenden Ansprüche, dadurch gekennzeichnet, dass das glashaltige oder gläserne Material (8) im verflüssigten Zustand in einen Spalt zwischen dem transparenten Körper (6) und der die Durchgangsöffnung (4) begrenzenden Gehäusewand (2) geleitet und sodann erstarrt ist.

9. Sensor nach einem der vorstehenden Ansprüche, dadurch gekennzeichnet, dass die Durchgangsöffnung (4, 4', 40) zur Medienseite hin verjüngt ist.

10. Sensor nach Anspruch 9, dadurch gekennzeichnet, dass in der Durchgangsöffnung (4, 4', 40) in radialer Richtung erstreckte Auflager (26) für den noch nicht erschmolzenen zylinder- oder hülsenförmigen Formkörper (16) ausgebildet sind.

11. Sensor nach Anspruch 10, dadurch gekennzeichnet, dass die Durchgangsöffnung (4, 4') stufenförmig abgesetzt ist.

12. Sensor nach Anspruch 9, dadurch gekennzeichnet, dass die Durchgangsöffnung (40) konisch verjüngt ist.
